# EUROPÄISCHE PATENTSCHRIFT

(11) **EP 2 085 992 B1**
(45) Veröffentlichungstag und Bekanntmachung des Hinweises auf die Patenterteilung: **14.08.2013**
(21) Anmeldenummer: 09001311.1
(22) Anmeldetag: 30.01.2009
(51) Int. Cl.: H01H 9/54, B60K 37/06, H01H 9/18

(54) **Schalteranordnung für ein Kraftfahrzeug**
Switch assembly for a motor vehicle
Ensemble commutateur pour un véhicule automobile

(30) Priorität: 01.02.2008 DE 102008007420
(43) Veröffentlichungstag der Anmeldung: 05.08.2009
(73) Patentinhaber: Marquardt GmbH, 78604 Rietheim-Weilheim (DE)
(72) Erfinder: Umbrecht, Axel, 78532 Tuttlingen (DE)
(74) Vertreter: Otten, Herbert

(56) Entgegenhaltungen:
- EP-A- 0 594 144
- EP-A- 1 544 023
- DE-A1- 10 029 645
- DE-A1- 19 845 135
- DE-A1- 19 955 070
- DE-C1- 19 927 869

## Beschreibung

Die Erfindung betrifft eine Schalteranordnung nach dem Oberbegriff des Patentanspruchs 1.

In Kraftfahrzeugen werden elektrische Schalter als Bedienschalter zum Ein- und/oder Ausschalten der Kraftfahrzeugbeleuchtung, der Scheibenwischer, der Heckscheibenheizung, der elektrischen Fensterheber, der Innenzentralverriegelung oder für das Auslösen sonstiger Funktionen verwendet. Mehrere solcher Schalter können als Bedienfelder in der Mittelkonsole, im Armaturenbrett, in der Türablage o. dgl. zusammengefaßt sein.

Aus der DE 198 45 135 A1 sowie der EP 0 594 144 A1 sind Schalteranordnungen für Bedienfelder an sich bekannt. Desweiteren ist in der DE 199 55 070 A1 eine Schalteranordnung zum Schalten und/oder zur Auslösung von Funktionen für ein Bedienfeld in einem Kraftfahrzeug besohrieben, die einen zwei oder mehrere Schaltzustände aufweisenden Schalter enthält. Die Schalteranordnung ist mit einer Steuerschaltung zur Erfassung des Schaltzustandes des Schalters versehen. Der Schalter besitzt Codiermittel, derart daß dem Schalter ein voreinstellbarer Code zur Identifikation des jeweiligen Schalters in der Schalteranordnung zugeordnet ist. Als Codiermittel sind Widerstände, Lichtschranken oder Schaltmatten genannt. In manchen Anwendungsfällen fehlt es dieser bekannten Schalteranordnung an Flexibilität. Eine ebensolche Schalteranordnung ist auch aus der EP 1544 023 A2 bekannt, wobei das Codiermittel für den Schalter aus einem Speicherbaustein besteht.

Der Erfindung liegt die Aufgabe zugrunde, die Schalteranordnung, insbesondere im Hinblick auf die Codiermittel, derart weiteizuentwickaln, daß die Flexibilität gesteigert ist. Insbesondere soll die Schalteranordnung die mit deren Bedienung durch den Benutzer zusammenhängenden Aufgaben selbständig steuern,

Diese Aufgabe wird bei einer gattungsgemäßen Schalteranordnung durch die kennzeichnenden Merkmale des Anspruchs 1 gelöst.

Bei der erfindungsgemäßen Schalteranordnung besteht das Codiermittel aus einem Speicherbaustein. Der im Speicherbaustein abgelegte Code ermöglicht eine Identifizierung des Schalters und/oder der Funktion des Schalters, indem anhand des erfaßten Codes dem Schalter von der Steuerschaltung eine Funktion aus einer Menge von Funktionen zuordenbar ist. Vorteilhafterweise ist somit die Funktion-Codierung des Einzelschalters über einen Speicherbaustein in flexibler Art und Weise geschaffen. Weitere Ausgestaltungen der Erfindung sind Gegenstand der Unteransprüche.

Es bietet sich an, daß der Speicherbaustein programmierbar und/oder wiederprogrammierbar ist. Damit kann sehr flexibel bei der Montage der Schalteranordnung und/oder des Bedienfeldes die Funktion des jeweiligen Schalters festgelegt werden. Es ist sogar noch eine spätere Änderung der Funktion des Schalters, beispielsweise bei einem Service für das Kraftfahrzeug möglich.

Zweckmäßigerweise besteht der Speicherbaustein aus einem nichtflüchtigen Speicher, wie einem ROM, PROM, EPROM, EBPROM, Flash-Speicher o. dgl., welche funktionssicher und zuverlässig arbeiten. Die Steuerschaltung kann in kostengünstiger Weise einen Mikroprozessor, einen Mikrocontroller o, dgl. aufweisen, welcher eine sehr flexible Ausgestaltung der Schalteranordnung zuläßt.

Der Schalter kann als Wipp- und/oder Druckschalter ausgebildet sein, was eine ergonomische Bedienung durch den Benutzer des Kraftfahrzeugs gestattet. Ein solcher elektrischer Schalter besitzt ein als Wippe und/oder als Taste ausgestaltetes Betätigungsorgan, welches bei entsprechender Betätigung durch den Benutzer schaltend auf ein Kontaktsystem einwirkt. Das Kontaktsystem kann in herkömmlicher Weise als elektromechanisches Kontaktsystem ausgestaltet sein. Besonders kostengünstig ist es, wenn das Kontaktsystem des Schalters aus einer Schaltmatte besteht. Schließlich kann zur weiteren Verbesserung der Bedienbarkeit der Schalter mit einer Funktions- und/oder Symbolbeleuchtung für das Betätigungsorgan ausgestattet sein.

Die Erfindung stellt weiterhin ein Bediefeld, insbesondere zur Verwendung in einem Kraftfabrzeug bereit. Das Bedienfeld umfaßt eine derartige Schalteranordnung, bevorzugterweise jedoch mehrere solche Schalteranordnungen, die an zweckmäßiger Stelle im Kraftfahrzeug, beispielsweise im Armaturenbrett, in der Mittelkonsole, in der Türablage o. dgl., angeordnet sind. Dabei ist die Schalteranordnung Bestandteil eines Bussystems, wobei die Schalteranordnung als Slave im Bussystem angeordnet ist. Weiterhin kann das Bussystem ein Steuergerät als Master aufweisen, wobei der Master zur Steuerung des Bussysterns und/oder der Schalteranordnung dient. Der Slave steuert selbständig die mit der Bedienung der Schalteranordnung durch den Benutzer zusammenhängenden Aufgaben. Insbesondere identifiziert der Slave die vom Benutzer angewählte Funktion. Diese jeweils vom Benutzer angewählte Funktion wird dann vom Slave an den Master übermittelt, wobei der Master wiederum die Ausführung der Funktion veranlaßt.

Desweiteren koordiniert der Master die einzelnen Schalteranordnungen im Bedienfeld. Hierzu stellt zweckmäßigerweise das als Master ausgebildete Steuergerät die Verbindung mit einem übergeordneten Bussystem im Kraftfahrzeug her. Im Hinblick auf die erforderliche Komplexität bietet es sich an, daß es sich bei dem Bussystem für die Schalteranordnung um einen LIN(Local Interconnect Network)-Bus und/oder bei dem übergeordneten Bussystem im Kraftfahrzeug um einen CAN(Controller Area Network)-Bus handelt.

Zusammenfassend ist für eine besonders bevorzugte Ausgestaltung nachfolgendes festzustellen. Das flexible Schaltersystem besteht aus Einzelschaltern mit verschiedenen Funktionen und mehreren Schalteraufnahmen mit Elektronik, in die mehrere Schalter eingesteckt werden können, und die die Schaltersignale über ein Bussystem an andere Steuergeräte im Fahrzeug verteilen. Das System ist so flexibel, daß der Einzelschalter an jede beliebige Stelle gesteckt werden kann. Die Funktion des Einzelschalters ist positionsunabhängig. Die Funktionkodierung im Einzelschalter erfolgt über einen nichtflüchtigen Speicherbaustein, wie ein EEPROM, ROM oder ähnliches, in den eine Adresse einprogrammiert werden kann. Diese Adresse ist im System eindeutig einer Funktion zugeordnet. Die Elektronik in der Schalteraufnahme kann die Adresse jeder Schalterpcsition auslesen und bei einer Betätigung dann das der Funktion zugeordnete Schaltersignal auf den Bus setzen. Die Programmierung kann im Produktionsablauf des Binzelschalters eingeschrieben werden. Sie kann aber auch in einem separaten Schritt, beispielsweise parallel zur Laserung des Symbols einprogrammiert werden. Selbst eine Programmierung im Fahrzeug ist denkbar.

Die mit der Erfindung erzielten Vorteile bestehen insbesondere darin, daß eine Festlegung der Funktion des Schalters erst bei dessen Codierung notwendig ist. Dies kann somit noch bei der Montage des Schalters erfolgen, wobei gegebenenfalls die Codierung des Schalters und das Anbringen des zugehörigen Funktionssymbols am Betätigungsorgan des Schalters, beispielsweise durch Laserbeschriftung o. dgl., in der Montagelinie erfolgen kann. Insbesondere ist vorteilhaft, daß die vom jeweiligen Schalter auszulösenden Funktionen nach Wahl frei im Bedienfeld angeordnet werden können. Das Einhalten eines vorbestimmten Platzes ist nicht erforderlich, da die Zuordnung der Funktion durch die Codierung erfolgt. Damit sind kundenspezifische Ausführungen der Bedienfelder auf einfache Weise ermöglicht, es wird eine große Flexibilität erzielt und es wird eine beträchtliche Kostenreduzierung für die Lagerhaltung bei Varianten erreicht. Zusammenfassend ist zu sagen, daß es sich um eine sehr flexible Schalteranordnung handelt, die dennoch kostengünstig ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein Bedienfeld für ein Kraftfahrzeug mit mehreren Schalteranordnungen als Blockschaltbild,
- Fig. 2: schematisch die nähere Ausgestaltung der Schalteranordnung,
- Fig. 3: schematisch die nähere Ausgestaltung eines als Wippschalter ausgebildeten einzelnen Schalters,
- Fig. 4: schematisch die nähere Ausgestaltung eines als Druckschalter ausgebildeten einzelnen Schalters und
- Fig. 5: eine beispielhafte Anordnung des Bedienfeldes im Kraftfahrzeug.

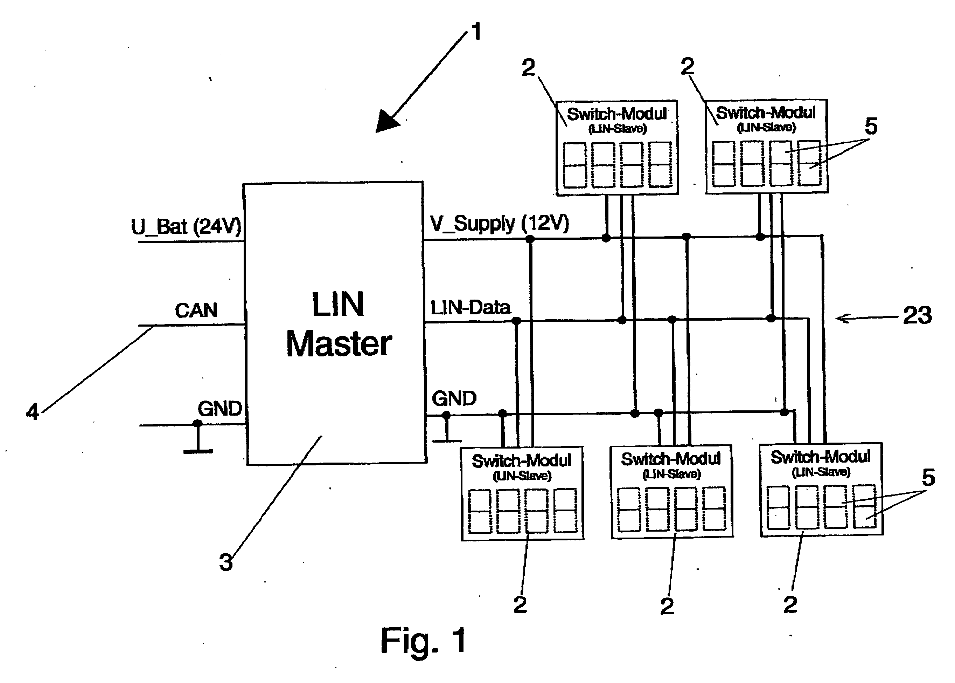

In Fig. 1 ist eine Schalteranordnung 2 zum Schalten und/oder zur Auslösung von Funktionen für ein Bedienfeld 1 in einem Kraftfahrzeug zu sehen. Vorliegend sind im Bedienfeld 1 mehrere Schalteranordmungen 2 enthalten, die über ein Master-Steuergerät 3 an ein Bussystem 4, beispielsweise den bekannten CAN-Bus angeschlossen sind. Die Schalteranordnung 2 enthält wiederum wenigstens einen oder auch mehrere einzelne Schalter 5.

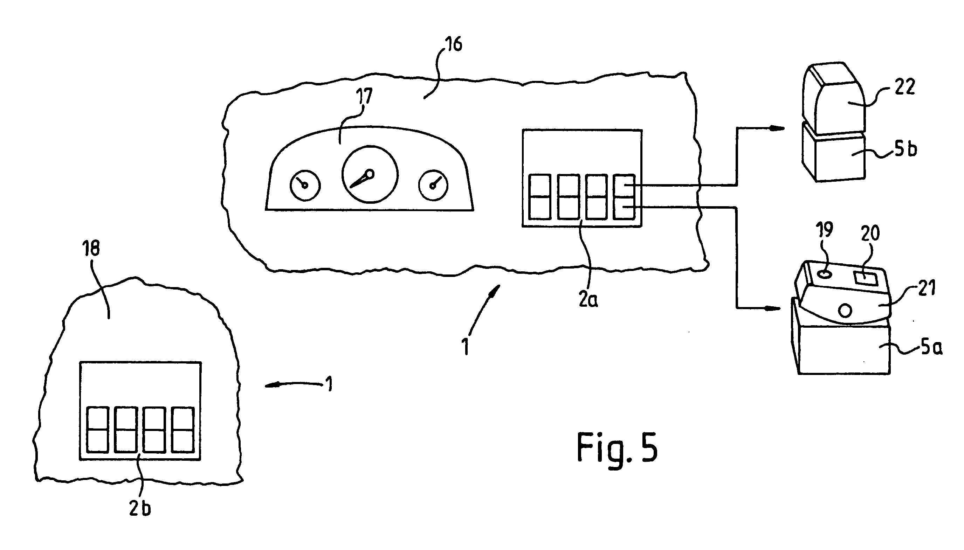

Eine beispielhafte Anordnung dieses Bedienfeldes 1 im Kraftfahrzeug ist in Fig. 5 gezeigt. Die eine Schalteranordnung 2a des Bedienfeldes 1 ist im Armaturenbrett 16 neben dem Kombiinstrument 17 angeordnet und dient zum Beispiel zur Bedienung von Funktionen für die Klimaanlage sowie für die Belüftung im Kraftfahrzeug. Die andere Schalteranordnung 2b des Bedienfeldes 1 ist in der Türablage 18 befindlich und dient zum Beispiel zur Bedienung von Funktionen für die Fensterscheibe sowie für die Autotüre. Anhand der Schalteranordnung 2a ist verdeutlicht, daß die Schalteranordnung 2 als Schalteraufnahme zum Einstecken von elektrischen Schaltern 5 dient, wobei die Schalter 5 beispielsweise als Wippschalter 5a oder als Druckschalter 5b je nach ergonomischer Erfordernis ausgestaltet sein können. Der Wippschalter 5a weist zur Bedienung für den Benutzer eine Wippe 21 als Betätigungsorgan auf während der Druckschalter 5b eine Taste 22 als Betätigungsorgan besitzt. Wie anhand des Wippschalters 5a gezeigt ist, kann das Betätigungsorgan 21 ein beleuchtbares Funktionssymbol 20 aufweisen, das die durch den Wippschalter 5a zu bedienende Funktion darstellt. Desweiteren befindet sich am Betätigungsorgan 21 eine Funktionsanzeige 19, die bei eingeschalteter Funktion aufleuchtet. Selbstverständlich kann auch die Taste 22 des Druckschalters 5b ein Funktionesymbol und/oder eine Funktionsanzeige besitzen, was hier jedoch nicht weiter dargestellt ist.

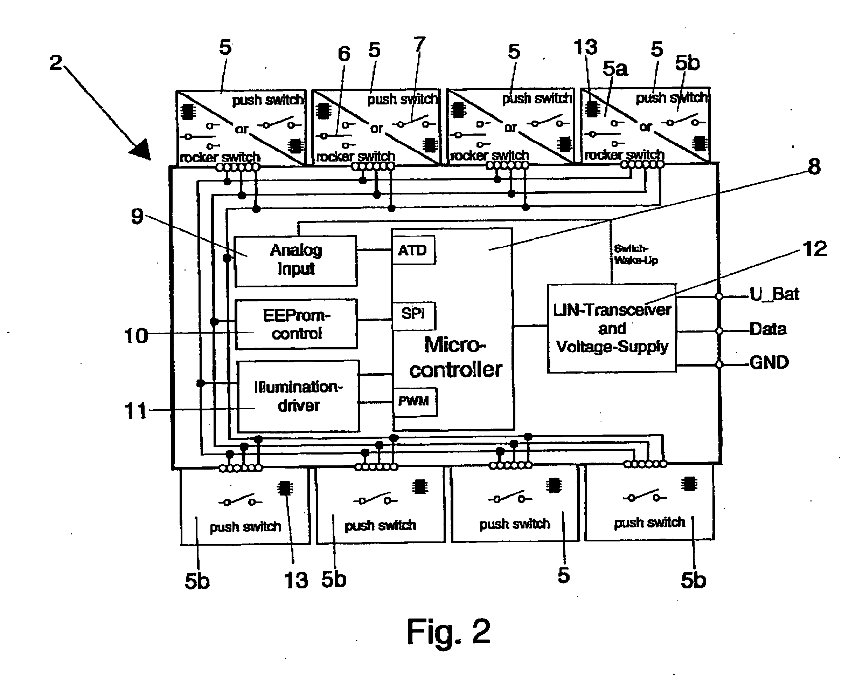

Die nähere Ausgestaltung der Schalteranordnung 2 ist in Fig. 2 gezeigt. Der Schalter 5 besitzt ein Kontaktsystem 6, 7, das zwei oder mehrere Schaltzustände aufweist. In der Schalteranordnung 2 befindet sich eine, beispielsweise aus einem Mikroprozessor oder Mikrocontroller bestehende Steuerschaltung 8, die über eine Eingangsschaltung 9 den Schaltzustand des Schalters 5 erfaßt. Der Schalter 5 besitzt weiterhin ein Codiermittel 13, derart daß dem Schalter 5 ein voreinstellbarer Code zugeordnet ist Das Codiermittel 13 besteht aus einem nichtflüchtigen Speicherbaustein. Der im Speicherbaustein 13 abgelegte Code ermöglicht eine Identifizierung des jeweiligen Schalters 5 in der Schalteranordnung 2, indem die Steuerschaltung 8 mittels einer Speichersteuerung 10 auf den im Speicherbaustein 13 abgelegten Code zugreift. Anhand des erfaßten Codes ist dem Schalter 5 von der Steuerschaltung 8 eine bestimmte Funktion aus einer Menge von Funktionen, die wiederum in der Steuerschaltung 8 abgelegt sind, zugeordnet. Somit kann jeder Schalter 5 an beliebiger Stelle in der Schalteranordnung 2 zum Einsatz kommen, denn die Funktion des Schalters 5 ist unabhängig vom Einsatzort durch den Code festgelegt. Die Steuerschaltung 8 übermittelt dann mittels eines Transceivers 12 die den jeweiligen Schalter 5 betreffenden Informationen, beispielsweise bei dessen Betätigung durch den Benutzer, an das in Fig. 1 sichtbare Master-Steuergerät 3.

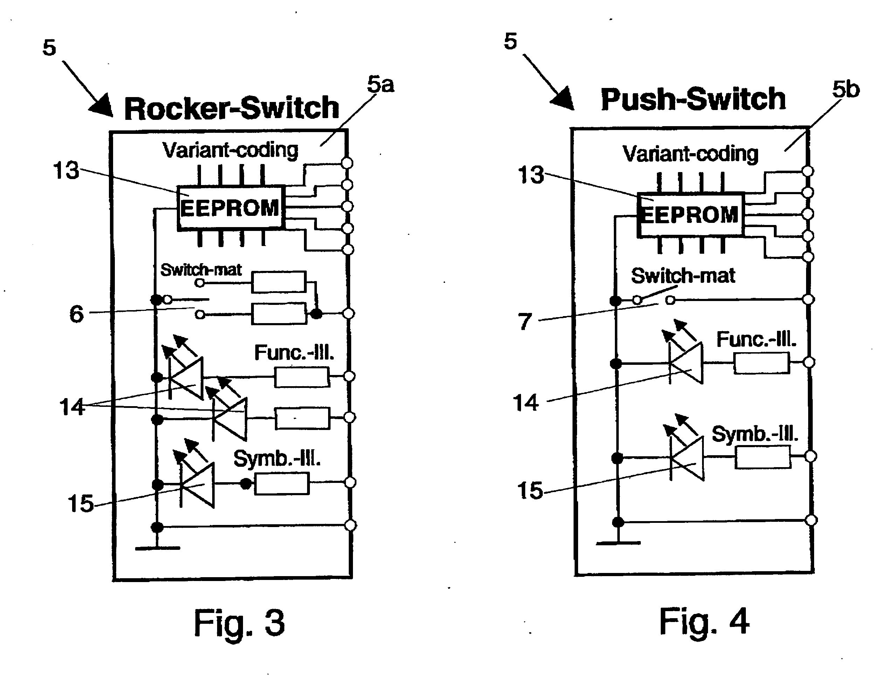

Wie bereits erwähnt, kann der Schalter 5 als Wippschalter 5a ausgebildet sein, welcher schematisch in Fig. 3 zu sehen ist. Der Schalter 5 kann auch als Druckschalter 5b ausgebildet sein, welcher schematisch in Fig. 4 zu sehen ist. Wie anhand von Fig. 3 oder Fig. 4 zu erkennen ist, besteht das Kontaktsystem 6 des Wippschalters 5a sowie das Kontaktsystem 7 des Druckschalters 5b aus einer Schaltmatte. Selbstverständlich kann das Kontaktsystem 6, 7 auch als ein elektromechanisches Kontaktsystem ausgestaltet sein. Der Benutzer wirkt manuell mittels dem in Fig. 5 gezeigten Betätigungsorgan 21, 22 auf das Kontaktsystem 6, 7 schaltend ein. Der Schalter 5 besitzt eine Funktionsbeleuchtung 14 für die Funktionsanzeige 19 (siehe Fig. 5) sowie eine Symbolbeleuchtung 15 für das Funktionssymbol 20 (siehe Fig. 5), die von einem in Fig. 2 sichtbaren Beleuchtungstreiber 11 entsprechend angesteuert werden, beispielsweise dimmbar mittels einer Pulsweiten(PWM)-Modulation.

Der Speicherbaustein 13 ist programmierbar, so daß der der jeweiligen Variante der Schalteranordnung 2 zugeordnete Code des Schalters 5 in flexibler Art in den Speicherbaustein 13 einschreibbar ist. Falls gewünscht kann der Speicherbaustein 13 auch wiederprogrammierbar ausgebildet sein, womit sogar eine nachträgliche Umcodierung möglich ist. Bei dem nichtflüchtigen Speicherbaustein kann es sich um ein ROM, ein PROM, ein EPROM, ein EEPROM, einen Flash-Speicher o. dgl, handeln.

Wie man weiter anhand der Fig. 1 erkennt, umfaßt das Bedienfeld 1 mehrere Schalteranordnungen 2, die Bestandteil eines Bussystems 23 sind. Bei dem Bussystem 23 für die Schalteranordnung 2 handelt es sich um den LIN(Local Interconnect Network)-Bus. Das Bussystem 23 weist das Steuergerät 3 als Master zur Steuerung des Bussystems 23 und/oder der Schalteranordnung 2 auf, wobei die Schalteranordnung 2 als Slave im Bussystem 23 angeordnet ist. Das als Master ausgebildete Steuergerät 3 stellt dann weiter die Verbindung mit dem übergeordneten Bussystem 4 im Kraftfahrzeug her. Bei dem übergeordneten Bussystem 4 im Kraftfahrzeug handelt es sich um den CAN(Controller Area Network)-Bus.

Die Erfindung ist nicht auf das beschriebene und dargestellte Ausführuagebeispiel beschränkt. Sie umfaßt vielmehr auch alle fachmännischen Weiterbildungen im Rahmen der durch die Patentansprüche definierten Erfindung. So kann eine derartige Schalteranordnung nicht nur in Kraftfahrzeugen eingesetzt werden sondern auch an Haushaltsgeräten, Werkzeugmaschinen o. dgl, Verwendung finden.

### Bezugszeichen-Liste:

- 1:: Bedienfeld
- 2:: Schalteranordnung
- 2a:: Schalteranordnung (im Armaturenbrett)
- 2b:: Schalteranordnung (in der Türablage)
- 3:: Steuergerät / Master-Steuergerät
- 4:: Bussystem (CAN)
- 5:: Schalter
- 5a:: Wippschalter
- 5b:: Druchschalter
- 6,7:: Kontaktsystem (von Schalter)
- 8:: Steuerschaltung
- 9:: Eingangsschaltung
- 10:: Speichersteuerung
- 11:: Beleuchtungstreiber
- 12:: Transceiver
- 13:: Codiermittel/ Speicherbaustein
- 14:: Funktionsbeleuchtung
- 15:: Symbolbeleuchtung
- 16:: Armaturenbrett
- 17:: Kombiinstrument
- 18:: Türablage
- 19:: Funktionsanzeige
- 20:: Funktionssymbol
- 21:: Wippe / Betätigungsorgan
- 22:: Taste / Betätigungsorgan
- 23:: Bussystem (LIN)

## Patentansprüche

1. Schalteranordnung zum Schalten und/oder zur Auslösung von Funktionen, insbesondere für ein Bedienfeld (1) in einem Kraftfahrzeug, mit wenigstens einem zwei oder mehrere Schaltzustände aufweisenden Schalter (5), wobei der Schalter (5) Codiermittel (13) besitzt, derart, daß dem Schalter (5) ein voreinstellbarer Code zugeordnet ist, und mit einer Steuerschaltung (8) zur Erfassung des Schaltzustandes und/oder des Codes des Schalters (5), wobei das Codiermittel (13) aus einem Speicherbaustein besteht, und wobei der im Speicherbaustein (13) abgelegte Code eine Identifizierung des Schalters (5) und/oder der Funktion des Schalters (5) ermöglicht, **dadurch gekennzeichnet, daß** die Steuerschaltung (8) mittels einer Eingangsschaltung (9) den Schaltzustand des Schalters (5) erfaßt, daß die Steuerschaltung (8) mittels einer Speichersteuerung (10) auf den im Speicherbaustein (13) abgelegten Code zugreift, und daß die Steuerschaltung (8) anhand des erfaßten Codes dem Schalter (5) eine bestimmte Funktion aus einer Menge von Funktionen, die in der Steuerschaltung (8) abgelegt sind, zuordnet.

2. Schalteranordnung nach Anspruch 1, **dadurch gekennzeichnet, daß** der Speicherbaustein (13) programmierbar und/oder wiedeprogrammierbar ist.

3. Schalteranordnung nach Anspruch 1 oder 2, **dadurch gekennzeichnet, daß** der Speicherbaustein (13) aus einem nichtflüchtigen Speicher, insbesondere aus einem ROM, PROM, EPROM, EEPROM, Flash-Speicher o. dgl., besteht.

4. Schalteranordnung nach Anspruch 1, 2 oder 3, **dadurch gekennzeichnet, daß** die steuerschaltung (8) einen Mikroprozessor, einen Mikrocontroller o. dgl. aufweist.

5. Schalteranordnung nach einem der Ansprüche 1 bis 4, **dadurch gekennzeichnet, daß** der Schalter (5) als Wippschalter (5a) und/oder als Druckschalter (5b) ausgebildet ist, wobei insbesondere ein als Wippe (21) und/oder als Taste (22) ausgestaltetes Betätigungsorgan des Schalters (5a, 5b) auf ein Kontaktsystem (6,7) schaltend einwirkt, und daß vorzugsweise das Kontaktsystem (6,7) des Schalters (5) aus einer Schaltrnatte besteht.

6. Schalteranordnung nach einem der Ansprüche 1 bis 5, **dadurch gekennzeichnet, daß** der Schalter (5) eine Funktionsbeleuchtung (14) und/oder eine Symbolbeleuchtung (15) für das Betätigungsorgan (21, 22) besitzt.

7. Bedienfeld, insbesondere für ein Kraftfahrzeug, umfassend wenigstens eine Schalteranordnung (2), insbesondere mehrere Schalteranordnungen (2a, 2b) nach einem der Ansprüche 1 bis 6, **dadurch gekennzeichnet, daß** die Schalteranordnung (2) Bestandteil eines Bussystems (23) ist, daß vorzugsweise die Schalteranordnung (2) als Slave im Bussystem (23) angeordnet ist, und daß weiter vorzugsweise das Bussystem (23) ein Steuergerät (3) als Master zur Steuerung des Bussystems (23) und/oder der Schalteranordnung (2) aufweist.

8. Bedienfeld nach Anspruch 7, **dadurch gekennzeichnet, daß** das als Master ausgebildete Steuergerät (3) die Verbindung mit einem übergeordneten Bussystem (4) im Kraftfahrzeug herstellt.

9. Bedienfeld nach Anspruch 7 oder 8, **dadurch gekennzeichnet, daß** es sich bei dem Bussystem (23) für die Schalteranordnung (2) um einen LIN-Bus und/oder bei dem übergeordneten Bussystem (4) im Kraftfahrzeug um einen CAN-Bus handelt.

## Claims

1. A switch arrangement for the switching and/or for the triggering of functions, particularly for a control panel (1) in a motor vehicle, having at least one switch (5) having two or more switching states, wherein the switch (5) possesses an encoding means (13), such that a code which can be preset is assigned to the switch (5), and having a control circuit (8) for detecting the switching state and/or the code of the switch (5), wherein the encoding means (13) consists of a memory element, and wherein the code stored In the memory element (13) enables the identification of the switch (5) and/or the function of the switch (5), **characterized in that** the control circuit (8) detects the switching state of the switch (5) by means of an input circuit (9), that the control circuit (8) accesses the code stored In the memory element (13) by means of a memory control (10), and that the control circuit (8) assigns a specific function from a number of functions, which are stored in the control circuit (8) to the switch (5) by means of the detected code.

2. A switching arrangement according to claim 1, **characterized In that** the memory element (13) can be programmed and/or reprogrammed.

3. A switching arrangement according to claim 1 or 2, **characterized in that** the memory element (13) consists of a non-volatile memory, particularly of a ROM, PROM, EPROM, EEPROM, flash memory, or the like.

4. A switching arrangement according to claim 1, 2 or 3, **characterized In that** the control circuit (8) has a microprocessor, a microcontroller or the like.

5. A switching arrangement according to one of the claims 1 to 4, **characterized In that** the switch (5) is designed as a rocker switch (5a) and/or as a pressure switch (5b), wherein particularly an actuating element of the switch (5a, 5b) shaped as a rocker (21) and/or as a button (22) acts in a switching manner upon a contact system (6, 7), and that preferably the contact system (6, 7) of the switch (5) consists of a switching mat.

6. A switching arrangement according to one of the claims 1 to 5, **characterized in that** the switch (5) possesses a functional lighting (14) and/or a symbol lighting (15) for the actuating element (21, 22).

7. A control panel, particularly for a motor vehicle, comprising at least one switching arrangement (2), particularly several switching arrangements (2a, 2b) according to one of the claims 1 to 6, **characterized in that** the switching arrangement (2) is a component of a bus system (23), that preferably the switching arrangement (2) is arranged as a slave in the bus system (23), and that In addition preferably the bus system (23) has a control device (3) as a master for the control of the bus system (23) and/or the switching arrangement (2).

8. A control panel according to claim 7, **characterized In that** the control device (3) designed as a master produces the connection with a superior bus system (4) in the motor vehicle.

9. A control panel according to claim 7 or 8, **characterized in that** the bus system (23) for the switching arrangement (2) is a LIN-bus and/or the superior bus system (4) in the motor vehicle is a CAN-bus.

## Revendications

1. Agencement de commutateur pour la commutation et/ou pour le déclenchement de fonctions, en particulier pour un tableau de commande (1) dans un véhicule automobile, comprenant au moins commutateur (5) présentant deux ou plusieurs états de commutation, étant entendu que le commutateur (5) possède un moyen de codage (13) de telle sorte qu'un code pouvant être prédéterminé est attribué au commutateur (5), et comprenant une commutation de commande (8) pour la lecture de l'état de commutation et/ou du code du commutateur (5), étant entendu que le moyen de codage (13) est constitué d'un composant de mémoire et étant entendu que le code enregistré dans le composant de mémoire (13) permet une identification du commutateur (5) et/ou de la fonction du commutateur (5), **caractérisé en ce que** la commutation de commande (8) saisit l'état de commutation du commutateur (5) au moyen d'une commutation d'entrée (9), **en ce que** la commutation de commande (8) accède au code enregistré dans le composant de mémoire (13) au moyen d'une commande de mémoire(10), et **en ce que** la commutation de commande (8) attribue au commutateur (5), sur la base du code saisi, une fonction déterminée parmi une série de fonctions qui sont enregistrées dans la commutation de commande (8).

2. Agencement de commutateur selon la revendication 1, **caractérisé en ce que** le composant de mémoire (13) est peut être programmé et/ou reprogrammé.

3. Agencement de commutateur selon la revendication 1 ou 2, **caractérisé en ce que** le composant de mémoire (13) est constitué d'une mémoire rémanente, en particulier d'une mémoire ROM, PROM, EPROM, EEPROM, Flash ou similaire.

4. Agencement de commutateur selon la revendication 1, 2 ou 3, **caractérisé en ce que** la commutation de commande (8) présente un microprocesseur, un microcontrôleur ou similaire.

5. Agencement de commutateur selon l'une des revendications 1 à 4, **caractérisé en ce que** le commutateur (5) est réalisé comme commutateur bistable (5a) et/ou comme interrupteur à pression (5b), étant entendu en particulier qu'un organe d'actionnement du commutateur (5a, 5b) réalisé comme bascule (21) et/ou comme bouton (22) agit sur un système de contact (6, 7), et **en ce que** le système de contact (6, 7) du commutateur (5) est de préférence constitué d'un tapis sensible.

6. Agencement de commutateur selon l'une des revendications 1 à 5, **caractérisé en ce que** le commutateur (5) possède un éclairage de fonction (14) et/ou un éclairage de symbole (15) pour l'organe d'actionnement (21, 22).

7. Tableau de commande, en particulier pour un véhicule automobile, comprenant au moins un agencement de commutateur (2), en particulier plusieurs agencements de commutateurs (2a, 2b) selon l'une des revendications 1 à 6, **caractérisé en ce que** l'agencement de commutateur (2) fait partie intégrante d'un système de bus (23), **en ce que** de préférence, l'agencement de commutateur (2) est agencé comme esclave dans le système de bus (23), et **en ce que** de préférence encore, le système de bus (23) présente un dispositif de commande (3) comme maître pour la commande du système de bus (23) et/ou de l'agencement de commutateur (2).

8. Tableau de commande selon la revendication 7, **caractérisé en ce que** le dispositif de commande (3) réalisé comme maître effectue la connexion avec un système de bus (4) d'un niveau supérieur dans le véhicule automobile.

9. Tableau de commande selon la revendication 7 ou 8, **caractérisé en ce que** le système de bus (23) pour l'agencement de commutateur (2) est un bus LIN et/ou le système de bus (4) d'un niveau supérieur dans le véhicule automobile est un bus CAN.
